(19) Europäisches Patentamt
European Patent Office
Office européen des brevets

(11) **EP 2 182 625 B1**

(12) **EUROPÄISCHE PATENTSCHRIFT**

(45) Veröffentlichungstag und Bekanntmachung des Hinweises auf die Patenterteilung:
**19.03.2014 Patentblatt 2014/12**

(51) Int Cl.:
*H02M 7/219* *(2006.01)*     *H02M 1/00* *(2007.01)*

(21) Anmeldenummer: **08019192.7**

(22) Anmeldetag: **03.11.2008**

(54) **Verfahren zum Betrieb eines Stromrichters, Computerprogramm zur Implementierung eines solchen Verfahrens und Datenträger sowie Computersystem, insbesondere Stromrichter, auf dem ein derartiges Computerprogramm gespeichert bzw. geladen ist.**

Method for operating a frequency converter, computer program to implement such a method and data medium and computer system, especially frequency converter on which such a computer program is saved or loaded

Procédé destiné au fonctionnement d'un convertisseur de courant, programme informatique destiné à l'intégration d'un tel procédé et support de données ainsi que système informatique, notamment convertisseur de courant, sur lequel un tel programme informatique est stocké ou chargé.

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**05.05.2010 Patentblatt 2010/18**

(73) Patentinhaber: **Siemens Aktiengesellschaft 80333 München (DE)**

(72) Erfinder:
• **Bauer, Franz, Dr.**
 **91074 Herzogenaurach (DE)**
• **Benesch, Norbert**
 **90562 Heroldsberg (DE)**

(56) Entgegenhaltungen:
 **EP-A- 0 483 744**     **DE-A1-102006 028 103**

**EP 2 182 625 B1**

**Beschreibung**

Verfahren zum Betrieb eines Stromrichters, Computerprogramm zur Implementierung eines solchen Verfahrens und Datenträger sowie Computersystem, insbesondere Stromrichter, auf dem ein derartiges Computerprogramm gespeichert bzw. geladen ist

Die vorliegende Erfindung betrifft ein Verfahren zum Betrieb eines Stromrichters mit einer mit steuerbaren Halbleiterschaltern bestückten Brückenschaltung. Die Halbleiterschalter werden während eines Normalbetriebs des Stromrichters gemäß einer Normalbetriebsmodulation angesteuert, mit der am Ausgang des Stromrichters eine gewünschte Spannungscharakteristik erreicht wird. Als ein Beispiel für eine derartige Normalbetriebsmodulation kommt die so genannte Pulsweitermodulation (PWM) in Betracht.

Stromrichter und Verfahren zu deren Betrieb sind an sich bekannt. Insoweit wird zum Stand der Technik auf die DE 10 2005 012 150 A1 und die DE 10 2006 015 331 A1 verwiesen. Aus der DE 10 2006 028 103 A1 ist ein Verfahren zum Betrieb eines Stromrichters bekannt, bei dem eine Umschaltung zwischen einer Normalbetriebsmodulation und einem weiteren Modulationsmodus möglich ist. Die Umschaltung erfolgt dabei anhand von Messungen der Phasenströme. Messungen von Phasenströmen zeigt auch die EP 0 483 744 A. Dort sind jedoch keine mehreren Modulationsmodi vorgesehen und evtl. Überschreitungen von Schwellwerten durch die Phasenströme deaktivieren die Ansteuereinheiten zur Generierung der Transistorschaltsignale.

Ein Stromrichtergerät oder eine Stromrichterschaltung umfasst zumindest einen Netzanschluss und als Netzanschluss dafür vorgesehene, als Strompfade fungierende Stränge, beim Anschluss an ein Dreiphasennetz also drei Stränge, sodann den eigentlichen Stromrichter mit der die Stromrichtungsfunktionalität implementierenden Brückenschaltung und am Ausgang des Stromrichters einen Zwischenkreis, wobei ein erster Ausgang des Stromrichters einen ersten Zwischenkreiskontakt und ein zweiter Ausgang des Stromrichters einen zweiten Zwischenkreiskontakt bilden. Zwischen diesen beiden Zwischenkreiskontakten liegt im Betrieb eine Zwischenkreisspannung. Zur Pufferung und Glättung der Zwischenkreisspannung ist zwischen den Zwischenkreiskontakten üblicherweise ein Kondensator als Zwischenkreiskapazität angeordnet.

Wird ein solcher Umrichter als Energieerzeugungseinheit in einem (Insel-)Netz verwendet, so muss der Umrichter zur Kurzschlussklärung beitragen. Bis zur Auslösung normalerweise vorgesehner Sicherungseinheiten muss dazu ein Netzstrom aufgebracht werden, der typisch mindestens dem dreifachen Nennstrom entspricht. Allerdings sind Umrichter im Gegensatz zu elektrischen Maschinen in der Regel aufgrund der Eigenschaften der Halbleiterbauelemente und der elektrischen Verbindungen nicht für eine so hohe Überlastfähigkeit ausgelegt. Somit muss bislang eine Überdimensionierung des Umrichters nur für die Beherrschbarkeit sehr seltener und kurzzeitiger Betriebsfälle erfolgen.

Eine Aufgabe der vorliegenden Erfindung besteht entsprechend darin, ein Verfahren zum Betrieb eines Stromrichters und einen nach dem Verfahren arbeitenden Stromrichter anzugeben, bei dem die o. g. Nachteile vermieden werden oder zumindest hinsichtlich ihrer Auswirkung reduziert sind.

Diese Aufgabe wird erfindungsgemäß mit einem Verfahren mit den Merkmalen des Anspruchs 1 gelöst. Dazu ist bei einem Verfahren zum Betrieb eines Stromrichters wie oben beschrieben, wobei die Normalbetriebsmodulation zur Unterscheidung als erster Modulationsmodus bezeichnet wird, vorgesehen, dass, während einer Ausnahme- oder Fehlersituation, insbesondere Netzspannungseinbruch oder Kurzschluss oder sonstigen oder applikationsspezifischen Gründen, die Ansteuerung der Halbleiterschalter auf Basis eines zweiten Modulationsmodus erfolgt, dass in netzseitigen Strängen, an die der Stromrichter angeschlossen ist, eine Messung, z. B. eine Strommessung, durchgeführt wird und dass eine tatsächliche Ansteuerung der Halbleiterschalter in Ansehung von Schaltzeitpunkten des zweiten Modulationsmodus, also der grundfrequenten Modulation, und einer logischen Verknüpfung mit Ergebnissen der Messung erfolgt.

Der zweite Modulationsmodus zeichnet sich dabei im Vergleich zum ersten Modulationsmodus durch eine geringere Schaltfrequenz, also eine geringere Anzahl erforderlicher Schalthandlungen aus. Ein bevorzugtes Beispiel für einen im Sinne der Erfindung als zweiter Modulationsmodus verwendbaren Modulationsmodus ist die so genannte grund- oder netzfrequente Modulation.

Die Erfindung geht dabei von der Erkenntnis aus, dass die Verlustleistung eines Stromrichters maßgeblich abhängig von der Schaltfrequenz der Halbleiterschalter der Brückenschaltung ist. Um für kurzzeitige Überlastsituationen, also Ausnahme- und Fehlersituationen der oben genannten Art oder z. B. einer kurzzeitig geforderten Überlast aufgrund des Lastspiels spezieller Anwendung, den Maximalstrom des Stromrichters zu erhöhen, ist eine Reduzierung der Schaltfrequenz notwendig. Dies wird mit dem Übergang vom ersten Modulationsmodus, z. B. Pulsweitenmodulation, bei der jeder Halbleiterschalter mit einer Frequenz von z. B. 2,5 kHz schaltet, zum zweiten Modulationsmodus, also z. B. der grundfrequenten Modulation, bei der jeder Halbleiterschalter mit einer verringerten mittleren Schaltfrequenz, bei grundfrequenter Modulation z. B. in der Größenordnung von 550 Hz, schaltet, erreicht. Gleichzeitig muss aber weiterhin die geforderte Funktionalität des Stromrichters als 4-Quadranten-Stromrichter einschließlich Rückspeisefähigkeit, Schutz vor Überstrom und thermischer Überlastung sichergestellt sein, so dass die Ergebnisse der Messung in den netzseitigen Strängen mit den Schaltzeitpunkten gemäß dem zweiten Modulationsmodus einer logischen Verknüpfung unterworfen werden und die tatsächliche Ansteuerung der Halbleiterschalter entsprechend dem Ergebnis dieser logischen Verknüpfung erfolgt. Eine tatsächliche Ansteuerung der Halbleiterschalter erfolgt also nur, wenn nicht ein durch die Messung überprüfbarer Zustand des Stromrichters oder des Netzes dem entgegensteht.

Ausgehend davon ist bevorzugt vorgesehen, dass die logische Verknüpfung mit Ergebnissen der Messung zumindest die Überwachung eines vorgegebenen oder vorgebbaren Schwellwerts umfasst und eine tatsächliche Ansteuerung der Halbleiterschalter, auch wenn diese gemäß dem zweiten Modulationsmodus vorgesehen ist, dann nicht erfolgt, wenn das Ergebnis der Messung einen Schwellwert überschreitet. Durch diese Schwellwertüberwachung wird also der Schutz des Stromrichters vor Überstrom und thermischer Überlastung erreicht.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Vorteilhaft ist vorgesehen, dass die Messung in den netzseitigen Strängen für jeden Strang einzeln durchgeführt wird und die logische Verknüpfung der Ergebnisse jeder Messung sich nur auf den Schaltzeitpunkt derjenigen Halbleiterschalter bezieht, die an den jeweiligen Strang angeschlossen sind. Dies ermöglicht eine gezielte Behandlung, z. B. Strombegrenzung, unterschiedlicher Fehlersituationen, z. B. bei einem zwei- oder dreiphasigen Kurzschluss. Die Pulsfrequenzabsenkung im Wege des Übergangs zum zweiten Modulationsmodus bezieht sich jedoch auf die Ansteuerung sämtlicher Halbleiterschalter. Strompfade und Brückenelemente, die mit netzseitigen Strängen verbunden sind, die von dieser Fehlersituation nicht betroffen sind, werden also nach dem zweiten Modulationsmodus angesteuert, während die von der Fehlersituation betroffenen Strompfade grundsätzlich nach dem zweiten Modulationsmodus und zusätzlich so angesteuert werden, dass ansonsten zu besorgende Überlastsituationen vermieden werden.

Besonders bevorzugt ist vorgesehen, dass für die Strombegrenzung eine Hysteresebedingung beachtet wird, so dass bei einer solchen Ausführungsform vorgesehen ist, dass die tatsächliche Ansteuerung der Halbleiterschalter, auch wenn diese gemäß dem zweiten Modulationsmodus vorgesehen ist, auch dann nicht erfolgt, wenn das Ergebnis der Messung nach vorheriger Überschreitung des Schwellwertes noch oberhalb eines unteren Schwellwertes liegt. Schwellwert und unterer Schwellwert sind also die Grenzen der Hysterese. Eine Aktivierung einzelner Halbleiterschalter, in deren Strompfad es z. B. zu einem Überstrom gekommen ist, ist also ab dem Überstrom, also ab Überschreiten des Schwellwertes nicht mehr möglich, und erst wieder möglich, wenn der Strom auch den unter dem Schwellwert liegenden unteren Schwellwert wieder unterschritten hat.

Eine Ansteuerung der Halbleiterschalter und eine Ansteuerung einzelner Halbleiterschalter, die dann nicht erfolgt, wenn das Ergebnis der für den oder diese Halbleiterschalter relevanten Messung einen Schwellwert überschreitet, wird im Folgenden als Transistorsperre bezeichnet. Eine alternative Realisierung einer solchen Transistorsperre bei Überschreiten des Schwellwertes besteht bevorzugt darin, nicht nur den jeweiligen Halbleiterschalter, dessen Ansteuerung nach dem zweiten Modulationsmodus vorgesehen wäre, zu deaktivieren, also den Halbleiterschalter, der aktuell den Strom führt, sondern gleichzeitig auch den im jeweiligen Brückenzweig gegenüberliegenden Halbleiterschalter einzuschalten. Der dem jeweils gemäß dem zweiten Modulationsmodus anzusteuernde Halbleiterschalter in der Brückenschaltung gegenüberliegender Halbleiterschalter wird also antivalent zu dem gemäß dem zweiten Modulationsmodus anzusteuernden Halbleiterschalter angesteuert. Dadurch wird mit der gleichen Steuerschaltung auch ein reiner Stromhysteresebetrieb möglich, bei dem der Strom fortlaufend zwischen zwei vorgebbaren Stromgrenzen auf- und abgebaut wird.

Bevorzugt ist vorgesehen, dass sichergestellt wird, dass bei Überschreiten des Schwellwertes, also z. B. bei Erreichen der Stromschwelle, ein Halbleiterschalter nicht zu schnell oder zu häufig ein- und ausgeschaltet wird. Dies kann neben der Auswertung einer zweiten Schaltschwelle, also des unteren Schwellwertes, auch durch Einhaltung einer Mindestzeit realisiert werden. Dazu ist vorgesehen, dass die tatsächliche Ansteuerung der Halbleiterschalter, auch wenn diese gemäß dem zweiten Modulationsmodus vorgesehen ist, auch dann nicht erfolgt, wenn seit der vorherigen Überschreitung des Schwellwertes nicht mindestens eine vorgegebene oder vorgebbare Ruhezeit verstrichen ist. Alternativ ist auch möglich, eine Schaltzustandsänderung nur an diskreten Taktgrenzen eines Abtastsystems zuzulassen.

Die zuvor erwähnte Messung in den netzseitigen Strängen, bei der es sich üblicherweise um eine Messung der dort fließenden Ströme, also eine Strommessung, handelt, ist bisher als Kriterium für die Umschaltung zwischen erstem und zweitem Modulationsmodus erwähnt worden. Alternativ oder zusätzlich kommt als Umschaltkriterium zwischen den beiden Modulationsmodi auch eine Schwellwertüberschreitung einer von dem Strom in mindestens einem der netzseitigen Stränge direkt oder indirekt abhängigen Größe in Betracht. Insoweit kommt auch eine sprunghafte Änderung einer Netzimpedanz am Anschlusspunkt des Stromrichters oder eine Über- oder Unterschreitung eines parametrierbaren Toleranzbereiches durch die Netzimpedanz in Betracht. Durch Messung oder Modellierung der Anschlussspannungen $U_{RS1}$, $U_{ST1}$ und/oder $U_{RS2}$, $U_{ST2}$ kann beispielsweise ein Schätzwert für die aktuelle Netzimpedanz unter Verwendung der bekannten Phasenströme $i_R$, $i_S$, $i_T$ unter Betrachtung des Zusammenhangs $Z = U/I$ berechnet werden. Des Weiteren kommt auch die Betrachtung von Anschlussspannungen ($u_{RS1}$, $u_{ST1}$ und/oder $u_{RS2}$. $u_{ST2}$) in Betracht. Diese können gemessen oder mithilfe der bekannten Phasenströme $i_R$, $i_S$, $i_T$ und der sich aus den Schaltzuständen und der Zwischenkreisspannung ergebenden Stromrichterausgangsspannung und bekannten Eigenschaften eines ggf. vorhandenen Filters berechnet werden. Bei einer sprunghaften Änderung dieser Anschlussspannungen um mehr als einen parametrierbaren Wert oder Verlassen eines für die Anschlussspannungen parametrierten Toleranzbereichs kann ebenfalls eine Betriebsmodusumschaltung, also eine Umschaltung vom ersten zum zweiten Modulationsmodus, erfolgen. Ggf. kann abhängig von der verwendeten Netztopologie mit zusätzlichen Messmitteln auch eine Spannungsänderung gegen den Nullleiter oder gegen den Erdleiter als Umschaltkriterium verwendet werden.

Bevorzugt ist vorgesehen, dass nach einer ersten Betriebsmodusumschaltung eine Umschaltung vom zweiten zum ersten Modulationsmodus zurück erfolgt, wenn der Strom oder eine von dem Strom, wie oben beschrieben, direkt oder indirekt abhängige Größe in allen netzseitigen Strängen einen Schwellwert unterschreitet. Ein Zurückschalten zum Normalbetrieb kann demnach also erfolgen, wenn der aktuelle oder ein geglätteter Stromeffektivwert in allen drei Phasen den Schwellwert oder einen tiefer liegenden unteren Schwellwert (Hysterese) unterschreitet oder für eine einstellbare Zeit (beispielsweise eine Netzperiode) unterschreitet. Alternativ erfolgt die Zurückschaltung nach einer einstellbaren Zeit solcher Dauer, dass das Auslösen der Schutzmechanismen nach einer Netzstörung sichergestellt ist. Alternativ kann die Modusumschaltung auch durch eine stromrichterexterne Steuereinheit im Netz erfolgen, die Zugriff auf Informationen über den Netzzustand und das Auslösen von Schutzeinrichtungen hat. Wenn z. B. die Netzimpedanz als Kriterium für die Umschaltung betrachtet wird, folgt das Zurückschalten in den Normalbetrieb analog wie oben beschrieben, nämlich z. B. dann, wenn die Netzimpedanz wieder den regulären Toleranzbereich erreicht. Gleiches gilt, wenn andere Größen als Kriterium für die Betriebsmodusauswahl verwendet werden. Weiter bevorzugt kann auch vorgesehen sein, dass die Umschaltung zurück zum ersten Modulationsmodus nur zu einem Kommutierungszeitpunkt des zweiten Modulationsmodus erfolgt, so dass ein gleichsam verkontinuierlichter Wiederanlauf des Stromrichters im ersten Modulationsmodus nach definiertem Abschluss eines begonnenen Zyklus im zweiten Modulationsmodus erreicht ist.

Die Erfindung bezieht sich neben dem vorstehend skizzierten und weiter unten näher beschriebenen Verfahren auch auf einen nach dem Verfahren arbeitenden Stromrichter, also einen Stromrichter mit Mitteln zum Ausführen eines solchen Verfahrens. Diese Mittel werden im Folgenden als Betriebsmodusauswahlmittel, Strombegrenzungseingriffsmittel und Verknüpfungseinheit bezeichnet. Das oder die Betriebsmodusauswahlmittel sind zur Auswahl des ersten oder zweiten Modulationsmodus, also zur Betriebsmodusumschaltung, und zur Generierung von Signalen zur Ansteuerung der Halbleiterschalter entsprechend dem jeweiligen Modulationsmodus vorgesehen. Das oder die Strombegrenzungseingriffsmittel sind zur Generierung eines Signals in Abhängigkeit vom Ergebnis der Messung, insbesondere der Strommessungen, in einem oder mehreren der netzseitigen Stränge vorgesehen. Die Verknüpfungseinheit ist zur logischen Verknüpfung der von den Betriebsmodusauswahlmitteln und Strombegrenzungseingriffsmitteln generierten Signale und zur tatsächlichen Ansteuerung der Halbleiterschalter entsprechend dem jeweiligen Verknüpfungsergebnis vorgesehen. Wenn also durch die Betriebsmodusauswahlmittel der zweite Modulationsmodus ausgewählt ist und die Betriebsmodusauswahlmittel ein Signal zur Ansteuerung der Halbleiterschalter entsprechend diesem zweiten Modulationsmodus, also entsprechend der grundfrequenten Modulation, erzeugen, wird mit den Strombegrenzungseingriffsmitteln eine Strombegrenzung realisiert. Mittels der Verknüpfungseinheit, die eine logische Verknüpfung, insbesondere eine logische UND-Verknüpfung der beiden von den zuvor genannten Mitteln generierten Signale durchführt, wird ein Signal zur Ansteuerung der Halbleiter erzeugt, das eine tatsächliche Ansteuerung dann bewirkt, wenn gemäß dem Modulationsmodus eine Ansteuerung vorgesehen ist, und nicht gleichzeitig eine Situation, die eine Strombegrenzung erforderlich macht, vorliegt.

Bevorzugt ist für die Ausführung des Stromrichters vorgesehen, dass das Strombegrenzungseingriffsmittel einen Zweipunkt-Regler umfasst. Mit dem Zweipunkt-Regler ist die für die Strombegrenzung vorteilhafte Hysterese implementierbar, derart, dass eine Ansteuerung eigentlich zur Ansteuerung vorgesehener Halbleiterschalter dann nicht erfolgt, wenn eine betrachtete Größe einen Schwellwert überschreitet, und dass eine Ansteuerung erst wieder zugelassen wird, wenn die betrachtete Größe einen unterhalb des Schwellwertes liegenden unteren Schwellwert wieder unterschritten hat.

Das eingangs und nachfolgend mit weiteren Details beschriebene Verfahren ist bevorzugt in Software oder in einer Kombination von Soft- und Hardware implementiert, so dass die Erfindung auch ein Computerprogramm zur Ausführung dieses Verfahrens und ferner einen Datenträger mit einem solchen Computerprogramm betrifft. Insoweit betrifft die Erfindung schließlich auch ein Computersystem, auf dem ein derartiges Computerprogramm geladen ist, insbesondere einen Stromrichter wie hier und im Folgenden beschrieben, wobei das Computerprogramm während dessen Betrieb zur Ansteuerung der Betriebsmodusauswahlmittel, der Strombegrenzungseingriffsmittel und der Verknüpfungseinheit zur Realisierung des Verfahrens gemäß der Erfindung oder einzelner Ausgestaltungen wirksam ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1            einen Stromrichter,

FIG 2            ein Blockschaltbild eines Stromrichters mit einer Funktionalität gemäß der Erfindung,

FIG 3            eine eine Hysterese berücksichtigende Schwellwertüberwachung,

FIG 4            Ansteuersignale zur Ansteuerung des Stromrichters entsprechend einer grundfrequenten Modulation,

FIG 5            eine graphische Repräsentation der grundfrequenten Modulation als zweites Modulationsschema für den Betrieb des Stromrichters bei abgesenkter Schaltfrequenz,

FIG 6 und FIG 7      Auswirkungen einer Implementation der Erfindung in einem Stromrichter bei drei- bzw. zweiphasigem Kurzschluss.

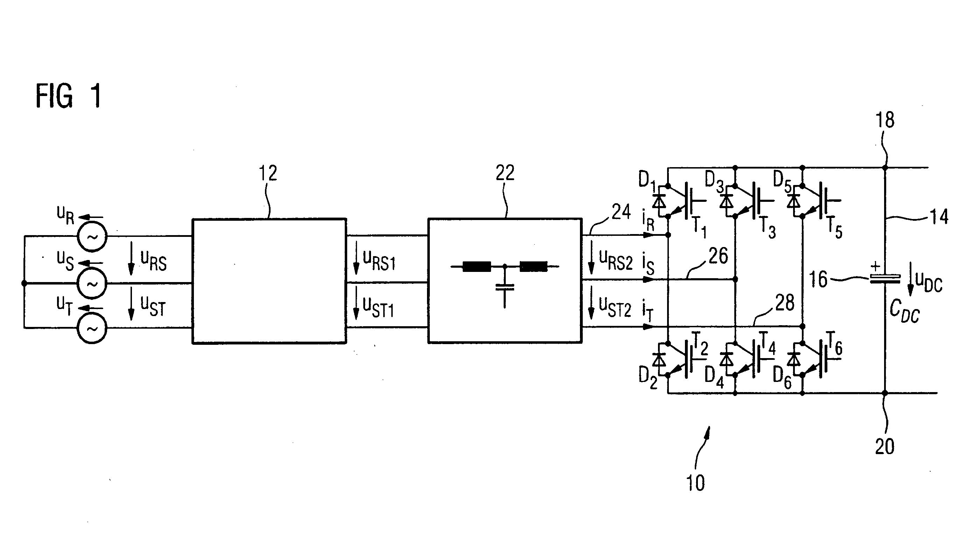

FIG 1 zeigt in einem Prinzipschaltbild schematisch vereinfacht den Anschluss und den Aufbau eines Stromrichters 10 an ein Dreiphasennetz 12, wobei der Stromrichter 10 eine mit steuerbaren Halbleiterschaltern T1, T2, T3, T4, T5, T6 und antiparallelen Dioden D1, D2, D3, D4, D5, D6 bestückte Brückenschaltung, insbesondere in einer Ausführung als IGBT-B6-Brücke, umfasst.

Dem Stromrichter 10 ist an dessen Ausgang ein Zwischenkreis 14 nachgeordnet, der eine Zwischenkreiskapazität 16 ($C_{DC}$) umfasst, über der im Betrieb eine Zwischenkreisspannung $u_{DC}$ abfällt. Von dem Stromrichter 10 sind eine Anzahl oberer Halbleiterschalter T1-T3 mit einem im Betrieb des Stromrichters 10 auf einem ersten Zwischenkreispotential liegenden ersten Zwischenkreiskontakt 18 verbunden. Entsprechend sind eine Anzahl unterer Halbleiterschalter T4-T6 mit einem im Betrieb des Stromrichters 10 auf einem zweiten Zwischenkreispotential liegenden zweiten Zwischenkreiskontakt 20 verbunden. Zwischen dem ersten und dem zweiten Zwischenkreiskontakt 18, 20 ist der Zwischenkreiskondensator 16 angeschlossen, und die Potentialdifferenz zwischen den an diesen Kontakten anliegenden Potentialen entspricht der Zwischenkreisspannung $u_{DC}$.

Eingangsseitig ist der Stromrichter 10 zumindest mittelbar, hier über einen Filter 22, mit dem Netz 12 verbunden, und zwar über netzseitige Stränge 24, 26, 28, und zwar derart, dass jeder Strang 24-28 an einen Mittelabgriff zwischen jeweils einem oberen und einem unteren Halbleiterschalter T1-T6 angeschlossen ist. In jedem Strang 24-28 fließt ein durch die Netzspannungen $u_R$, $u_S$, $u_T$ bestimmter Strom $i_R$, $i_S$, $i_T$. Zwischen je zwei Strängen 24-28, deren jeweils eingeprägte elektrische Größe $i_R$, $i_S$, $i_T$ auch als Phasenstrom bezeichnet wird, liegen am Eingang des Netzes 12, am Eingang des Filters 22 und am Eingang des Stromrichters 10 die Anschlussspannungen $u_{RS}$, $u_{ST}$ bzw. $u_{RS1}$, $u_{ST1}$ bzw. $U_{RS2}$, $U_{ST2}$ an.

Die Ansteuerung der Halbleiterschalter T1-T6 erfolgt mit einer in FIG 1 nicht gezeigten Ansteuerschaltung entsprechend einem Modulationsmodus, der so gewählt ist, dass sich am Ausgang des Stromrichters 10 eine gewünschte Zwischenkreisspannung $u_{DC}$ einstellt. Als Modulationsmodus kommt die so genannte Pulsweitermodulation (PWM) in Betracht. Damit lässt sich ein gewünschter Verlauf der Zwischenkreisspannung $u_{DC}$ in an sich bekannter Art mit ausreichender Qualität vorgeben.

Bei dem Stromrichter handelt es sich um einen selbst geführten Stromrichter 10 mit Halbleiterschaltern T1-T6 für einen 4-Quadranten-Betrieb (Ein- und Rückspeisung von Energie). Der Stromrichter 10 verfügt über Mittel zur Erfassung der Phasenströme $i_R$, $i_S$, $i_T$ und/oder des Zwischenkreisstroms oder einer Zwischenkreisspannung $u_{DC}$. Der Stromrichter 10 verfügt über Mittel zum getakteten Betrieb der Halbleiterschalter T1-T6 entsprechend gängigen Modulationsverfahren zur Spannungseinprägung (z. B. Pulsweitermodulation) oder Stromeinprägung (z. B. Strom-Zweipunkt-Regler). Der Stromrichter 10 kann als Gleichrichter am Drehstromnetz oder als Wechselrichter betrieben werden, beispielsweise zur Versorgung eines elektrischen Antriebs.

Die Erfindung befasst sich mit dem Betrieb des Stromrichters 10 bei Ausnahme- oder Fehlersituationen, insbesondere Netzspannungseinbruch oder Kurzschluss. Es ist bekannt, dass die Verlustleistung eines Stromrichters 10 maßgeblich von einer Schaltfrequenz der Halbleiterschalter T1-T6 abhängt. Um kurzzeitige Überlastsituationen ohne Beschädigung des Stromrichters 10 handhaben zu können und gleichzeitig zu gewährleisten, dass Sicherungseinheiten auf die Ausnahme- oder Fehlersituation reagieren, ist die maximale Stromtragfähigkeit des Stromrichters 10 zu erhöhen, ohne dass dafür eine Überdimensionierung der vom Stromrichter 10 umfassten Bauteile, also insbesondere der Halbleiterschalter T1-T6 und der Dioden D1-D6 erforderlich ist. Die Erfindung schlägt entsprechend vor, die Schaltfrequenz der Halbleiterschalter T1-T6 zu reduzieren, wobei die Funktionalität des 4-Quadranten-Stromrichters einschl. Rückspeisefähigkeit erhalten bleibt und gleichzeitig ein Schutz vor Überstrom und thermischer Überlastung gegeben ist.

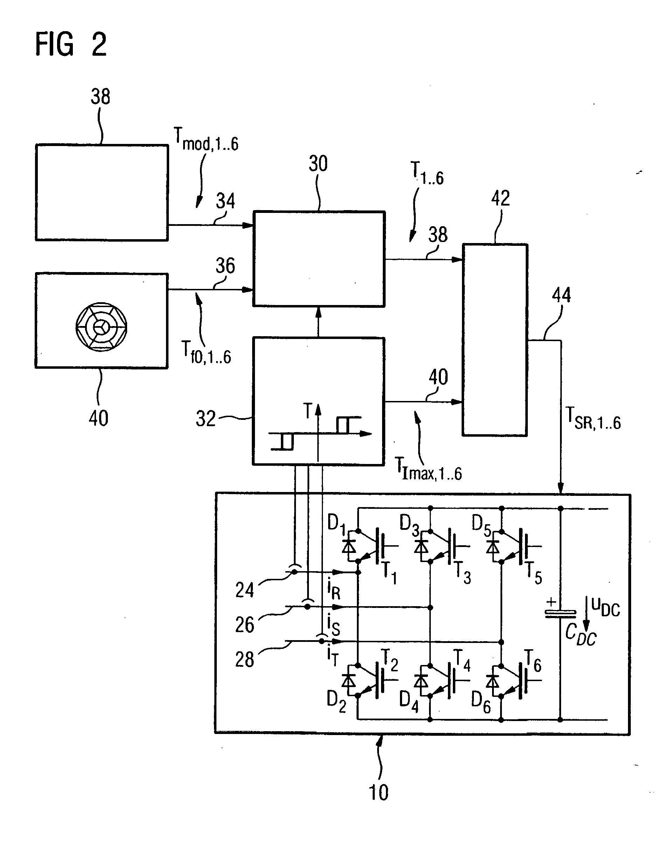

FIG 2 zeigt dafür schematisch vereinfacht ein Blockschaltbild eines Stromrichters 10 mit einer Funktionalität gemäß der Erfindung, die zusammen mit dem Stromrichter 10 in einem Gerät, einem nicht dargestellten Stromrichtergerät, implementiert sein kann. Stromrichter 10 und Stromrichtergerät werden im Folgenden nicht näher unterschieden, so dass, soweit ein Stromrichter 10 gemäß der Erfindung beschrieben ist, wenn nichts Näheres angegeben ist, davon auszugehen ist, dass dieser die nachfolgend beschriebene Funktionalität umfasst oder zumindest in geeigneter Weise mit einer solchen Funktionalität kombiniert oder kombinierbar ist.

Die vorgenannte Funktionalität umfasst zumindest Betriebsmodusauswahlmittel 30 und Strombegrenzungseingriffsmittel 32, im Folgenden kurz auch als Modusauswahl 30 bzw. Strombegrenzung 32 bezeichnet. Die Modusauswahl 30 erhält als Eingangssignale 34, 36 Steuersignale zur Ansteuerung der Halbleiterschalter T1-T6 gemäß einem ersten oder zweiten Modulationsmodus, die jeweils auf einem ersten bzw. zweiten Modulationsschema 38, 40 basieren. Dem ersten Modulationsschema 38 liegt z. B. die Pulsweitermodulation zugrunde. Dem zweiten Modulationsschema 40 liegt eine so genannte grundfrequente Modulation zugrunde, d. h. die Schaltfrequenz der Halbleiterschalter T1-T6 entspricht der Netzfrequenz oder ist ein kleines Vielfaches davon. Die Eingangssignale 34, 36 repräsentieren also eine Normalbetriebsmodulation auf Basis des ersten Modulationsschemas 38 bzw. eine grundfrequente Modulation auf Basis des zweiten Modulationsschemas 40. Je nach Status der Modusauswahl 30 wird eines der beiden Eingangssignale 34, 36 auf deren Ausgang ausgegeben und repräsentiert dort einen ersten oder zweiten Modulationsmodus.

Eine Modusumschaltung erfolgt in Abhängigkeit einer Messung, die in Bezug auf die netzseitigen Stränge 24-28 durchgeführt wird. Eine Repräsentation eines Ergebnisses einer solchen Messung gelangt entweder direkt oder indirekt, nämlich über die Strombegrenzung 32, zur Modusauswahl 30. Unabhängig davon, ob die Modusauswahl 30 direkt oder indirekt auf Basis der Messung angesteuert wird, erfolgt eine Modusumschaltung, also ein Übergang vom ersten Modulationsmodus zum zweiten Modulationsmodus, dann, wenn das Messergebnis einen Schwellwert überschreitet, also wenn z. B. einer oder mehrere der Phasenströme $i_R$, $i_S$, $i_T$ einen Schwellwert überschreitet. Bereits durch die damit einhergehende Modusumschaltung ist eine Reduktion der Schaltfrequenz der Halbleiterschalter T1-T6 erreicht. Bei einer Schaltfrequenz der Halbleiterschalter T1-T6 bei PWM in der Größenordnung von 2,5 kHz und einer mittleren Schaltfrequenz der Halbleiterschalter T1-T6 bei einer grundfrequenten Modulation als zweitem Modulationsmodus in einer Größenordnung von 0,5 kHz ist eine Reduktion der Schaltfrequenz um ca. ein Fünftel erreicht. Die genannte mittlere Schaltfrequenz bei grund- oder netzfrequenter Modulation ergibt sich aus der zugrunde liegenden Netzfrequenz von 50 Hz zzgl. zusätzlich erforderlicher Schalthandlungen zur Vermeidung von Überströmen. Die Verlustleistung des Stromrichters 10 ist proportional entsprechend reduziert. Die Erfindung sieht aber zusätzlich eine durch das oder die Strombegrenzungseingriffsmittel 32 realisierte Strombegrenzung vor, die ein Aktivierungssignal 41 immer dann erzeugt, wenn die oder jede von der Messung erfasste Größe vorgegebenen Kriterien genügt.

Wenn also z. B. diese Kriterien nicht eingehalten werden, wird ein Aktivierungssignal 41 erzeugt, welches einer Verknüpfungseinheit 42 zugeführt wird, welche die Ausgänge von Modusauswahl 30 und Strombegrenzung 32 logisch derart verknüpft, dass ein Halbleiterschalter T1-T6, auch wenn dessen Ansteuerung gemäß dem jeweiligen Modulationsmodus vorgesehen ist, nicht angesteuert wird. Als Aktivierungssignal 41 ist dazu bevorzugt ein Binärsignal vorgesehen, das eine logische Eins repräsentiert, wenn die durch die Messung betrachteten Größen den jeweils vorbestimmten Kriterien genügen und eine logischen Null repräsentiert, wenn die durch die Kriterien definierte Bedingung nicht erfüllt ist. Eine durch die Verknüpfungseinheit 42 ausgeführte logische UND-Verknüpfung mit einem eine logische Null repräsentierenden Aktivierungssignal 41 führt stets zu einer logischen Null an einem Ausgang 44 der Verknüpfungseinheit 42, so dass die Ansteuerung des jeweiligen Halbleiterschalters T1-T6 sicher unterbunden ist. Immer dann, wenn die mit der Messung überwachten elektrischen Größen, insbesondere die Größe der Phasenströme $i_R$, $i_S$, $i_T$, vorgegebenen Kriterien genügt, ergibt sich als Aktivierungssignal 41 eine logische Eins, die nach einer logischen Verknüpfung in der Verknüpfungseinheit 42 an deren Ausgang 44 immer dann eine logische Eins zur Ansteuerung einzelner Halbleiterschalter T1-T6 ergibt, wenn nach dem jeweiligen Modulationsmodus, also dem Signal am Ausgang 39 der Modusauswahl 30, dessen Ansteuerung vorgesehen ist.

Wenn zuvor von einer indirekten Ansteuerung der Modusauswahl 30 auf Basis von Messungen mit Bezug auf die netzseitigen Stränge 24-28 die Rede war, kann eine solche indirekte Ansteuerung von der Strombegrenzungseinheit 32 ausgehen und eine Ansteuerung, also eine Modusumschaltung zum zweiten Modulationsmodus immer dann bewirken, wenn das Messergebnis einen vorgegebenen Schwellwert überschreitet.

Die Modusumschaltung 30 und die Strombegrenzung 32 zusammen mit der nachgeschalteten Verknüpfungseinheit 42 sind Mittel zur Erweiterung des selbstgeführten Stromrichters 10 um eine Steuerlogik 30, 32, 44 zum grundfrequenten (netzfrequenten) Ansteuern der Halbleiterschalter T1-T6 und zum Deaktivieren einzelner Halbleiterschalter T1-T6, wenn eine von einer Messung erfasste Größe einen vorgebbaren Schwellwert überschreitet. Wenn die Messung als Strommessung durchgeführt wird, bezieht sich diese auf mindestens einen der Phasenströme $i_R$, $i_S$, $i_T$, also der Stromrichtereingangsströme. Wenn bei diesen mindestens einer den vorgegebenen Schwellwert überschreitet, wird mit der Verknüpfungslogik 42 erreicht, dass eine Ansteuerung der Halbleiterschalter T1-T6 insgesamt oder eine Ansteuerung der von der Überlastsituation betroffenen Halbleiterschalter T1-T6 nicht möglich ist.

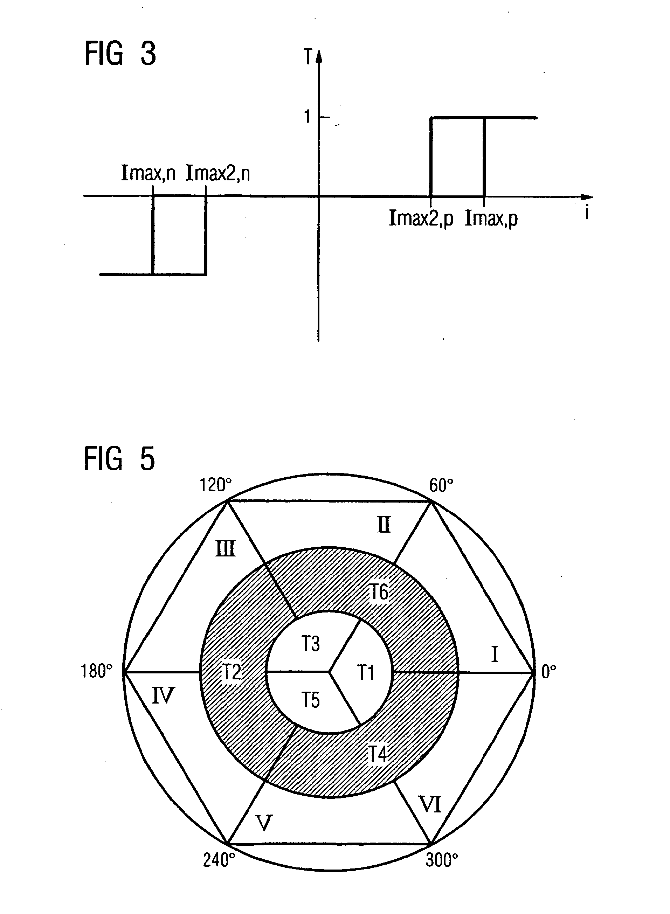

Für die Strombegrenzung 32 kann vorgesehen sein, dass diese nicht nur einen Schwellwert, sondern zusätzlich auch einen unteren Schwellwert überwacht, so dass sich eine Hysterese ergibt. Dies ist in FIG 3 mit Achsenbezeichnungen für den Fall einer Strommessung gezeigt. Auf der Abszisse ist der jeweilige Phasenstrom und auf der Abszisse sind für positive und negative Größen spiegelbildlich der Schwellwert und der untere Schwellwert ($I_{max,p}$ bzw. $I_{max2,p}$) abgetragen. Entsprechend dieser Schwellwerte erzeugt die Strombegrenzung 32 (FIG 2) ein binäres Aktivierungssignal 41 für den betreffenden Halbleiterschalter T1-T6, in FIG 3 nur als "T" gezeigt. Solange der jeweilige Phasenstrom unterhalb von $I_{max,p}$ verbleibt, ist das Aktivierungssignal 41 logisch Null, nach Invertierung also logisch Eins, und erlaubt bei der logischen Verknüpfung durch die Verknüpfungseinheit 42 (FIG 2) eine Ansteuerung des entsprechenden Halbleiterschalters T1-T6. Sobald der Strom über $I_{max,p}$ ansteigt oder unter $I_{max,n}$ absinkt, wechselt das Aktivierungssignal 41 auf logisch Eins, nach Invertierung also auf logisch Null, und bei Strömen oberhalb von $I_{max,p}$ oder unterhalb von $I_{max,n}$ ist also in keinem Falle eine Ansteuerung eines Halbleiterschalters T1-T6 möglich. Wenn der Strom nach vorheriger Überschreitung von $I_{max,p}$ den durch $I_{max,p}$ vorgegebenen Schwellwert wieder unterschreitet, bleibt das Aktivierungssignal 41 zunächst noch auf Eins und erlaubt in seiner invertierten Form auch jetzt noch keine Ansteuerung eines der Halbleiterschalter T1-T6. Erst wenn der Strom unter einen unteren Schwellwert $I_{max2,p}$ fällt, wechselt das Aktivierungssignal 41 wieder auf logisch Null, invertiert also auf logisch Eins, so dass an der als UND-Gatter fungierenden Verknüpfungseinheit 42 die Ansteuersignale zur Ansteuerung der Halbleiterschalter T1-T6 durchgeschaltet werden. Soweit vorstehend nicht explizit erwähnt, gelten die vorangehenden Ausführungen entsprechend auch für negative Ströme und dafür vorgesehene Schwellwerte und untere Schwellwerte $I_{max,n}$ bzw. $I_{max2,n}$.

Die Strombegrenzung 32 aufgrund der in FIG 3 gezeigten Hysterese kann auf Basis von Messwerten für jeden Phasenstrom $i_R$, $i_S$, $i_T$ einzeln oder auf Basis eines Mittelwertes sämtlicher Messwerte ausgeführt werden. Alternativ oder zusätzlich zur Erfassung der Phasenströme mit der allgemein als Messung bezeichneten Maßnahme zur Erkennung, ob eine Fehler- oder Ausnahmesituation vorliegt, kann sich diese auch auf andere elektrische Größen beziehen, insbesondere auf solche Größen, die mit den Phasenströmen direkt oder indirekt korreliert sind.

Die bei der in FIG 2 dargestellten Funktionalität erzeugten und verarbeiteten Signale werden im Folgenden zur vereinfachten Inbezugnahme anhand jeweils vorgesehner und in der Darstellung in FIG 2 bereits verwendeter kurzer Formelzeichen erläutert. Aus den beiden Modulationsschemata 38, 40 ergeben sich Ansteuersignale $T_{mod,1..6}$ und $T_{f0,1..6}$, also Ansteuersignale über der Zeit oder zumindest einer Netzperiode. Das zweite Modulationsschema 40 entspricht der grundfrequenten Modulation und das Signal $T_{f0,1..6}$ kann entsprechend auch als Grundfrequenzsteuerung aufgefasst werden. Im Fehler- oder Ausnahmefall übernimmt die Modusauswahl 30 eine Umschaltung auf die Grundfrequenzsteuerung, so dass dessen Ausgangssignal 39, das allgemein als $T_{1..6}$ angegeben ist, der Grundfrequenzsteuerung $T_{f0,1..6}$ entspricht. Nach dessen Verknüpfung in der Verknüpfungseinheit 42 ergibt sich ein tatsächliches Ansteuersignal $T_{SR,1..6}$. Dieses ist gemäß dem Ansatz der Erfindung abhängig von der Strombegrenzung 32.

Am Beispiel des ersten Brückenzweiges gilt für das Ansteuersignal $T_{SR,1,2}$ der mit T1 und T2 bezeichneten Halbleiterschalter mit der grundfrequenten Ansteuerung $T_{f0,1,2}$ und den Signalen zur Strombegrenzung $T_{Imax,1,2}$:

$$T_{SR,1} = T_{f0,1} \text{ UND (NICHT } T_{Imax,1})$$

$$T_{SR,2} = T_{f0,2} \text{ UND (NICHT } T_{Imax,2})$$

Die Strombegrenzungssignale $T_{Imax,1..6}$ ergeben sich mit der in FIG 3 dargestellten Hysterese. Dies wird nachfolgend für die Strombegrenzungssignale $T_{Imax,1,2}$ für die mit T1 und T2 bezeichneten Halbleiterschalter gezeigt:

$$T_{Imax,1,neu} = 0 \text{ WENN } i_R > I_{max2,n}$$

$$T_{Imax,1,neu} = 1 \text{ WENN } i_R < I_{max,n} \text{ ODER } (T_{Imax,1,alt} = 1 \text{ UND } i_R < I_{max2,n}).$$

$$T_{Imax,2,neu} = 0 \text{ WENN } i_R < I_{max2,p}$$

$$T_{Imax,2,neu} = 1 \text{ WENN } i_R > I_{max,p} \text{ ODER } (T_{Imax,2,alt} = 1 \text{ UND } i_R < I_{max2,p}).$$

Die Auswertung einer zweiten Schaltschwelle, also eines unteren Schwellwertes unterhalb des in jedem Falle zu berücksichtigenden Schwellwertes, stellt sicher, dass bei dessen Erreichen, also z. B. bei Überschreiten einer Stromschwelle, ein Halbleiterschalter T1-T6 nicht zu schnell oder zu häufig ein- und ausgeschaltet wird. Neben der mit Schwellwert und unterem Schwellwert erreichten Hysterese kann dies alternativ oder zusätzlich auch durch Einhaltung einer Mindestzeit realisiert werden.

Die resultierende Schaltfrequenz bei einer Ausnahme- oder Fehlersituation hängt also von einer durch $(I_{max} - I_{max2})$ bestimmten Hysteresebreite ab. Vorzugsweise wird diese so festgelegt, dass sich für typische Netzverhältnisse eine günstige Schaltfrequenz ergibt. Alternativ ist es auch möglich, die Hysteresebreite mithilfe einer Regelung auf eine Mittelfrequenz zu regeln und die Hysteresebreite damit dynamisch den veränderlichen Netzbedingungen anzupassen. Für eine solche Regelung käme eine PI-Regelung in Betracht, der am Eingang eine Abweichung zwischen Ist-Pulsfrequenz und Soll-Pulsfrequenz zugeführt wird, und die am Ausgang ein Maß für die erforderliche Hysteresebreite liefert.

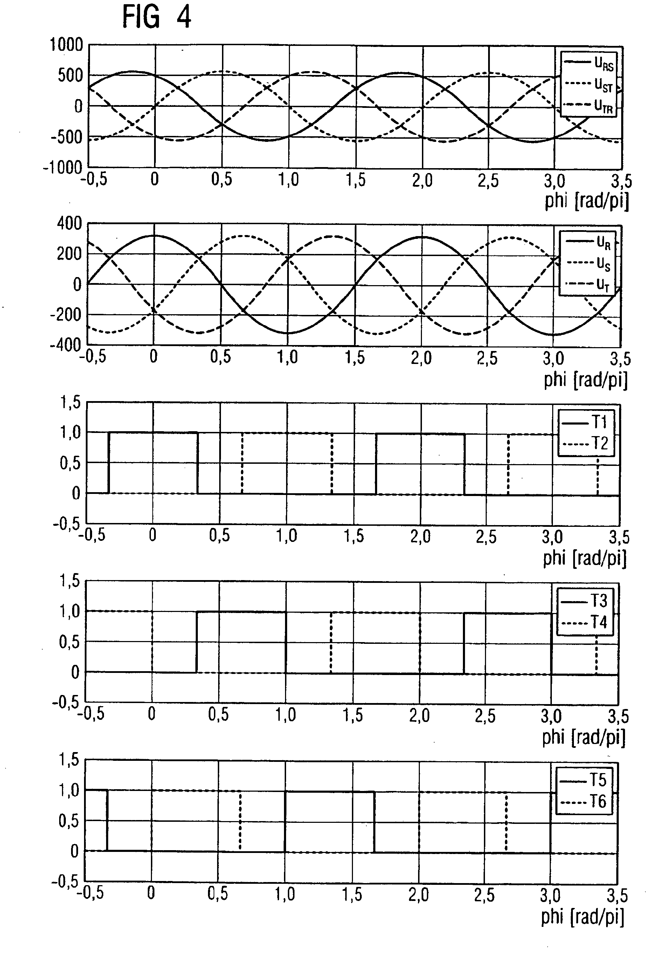

FIG 4 zeigt in den drei unteren Darstellungen Ansteuersignale zur Ansteuerung der dort jeweils ausgewiesenen Halbleiterschalter T1, T2; T3, T4; T5, T6 entsprechend der grundfrequenten Modulation, also dem zweiten Modulationsmodus. Diese Ansteuersignale werden im Betrieb am Ausgang 44 der Verknüpfungseinheit 42 ausgegeben. In den beiden oberen Darstellungen sind die Leiter-Leiter-Spannungen $u_{RS}$, $u_{ST}$ und $u_{TR}$ bzw. die Strangspannungen $u_R$, $u_S$ und $u_T$ gezeigt.

FIG 5 zeigt eine graphische Repräsentation des zweiten Modulationsschemas 40 (FIG 2), also der Grundlage zur Ansteuerung der Halbleiterschalter T1-T6 im grundfrequenten Betrieb, für eine Netzperiode von 0° bis 360°. Die sich ergebenden Schaltzustände der Halbleiterschalter T1-T6 sind in FIG 4 in den drei unteren Darstellungen gezeigt.

Die FIGen 6 und 7 zeigen Schaltsignale und -ströme des Stromrichters 10 bei dreiphasigem bzw. zweiphasigem Kurzschluss. Bei einer solchen Fehlersituation führt das Ansteigen einer der Phasenströme $i_R$, $i_S$, $i_T$ zur Umschaltung vom Normalbetrieb entsprechend dem ersten Modulationsmodus zu einer Ansteuerung der Halbleiterschalter T1-T6 auf Basis des zweiten Modulationsmodus entsprechend einer grundfrequenten Modulation. Dies wird durch die Modusauswahl 30 bewirkt. Zusätzlich ist mit der Strombegrenzung 32 auch bei reduzierter Schaltfrequenz entsprechend dem zweiten Modulationsmodus und damit reduzierter Verlustleistung ein Schutz des Stromrichters 10 vor Überstrom implementiert, so dass die Halbleiterschalter T1-T6 auch dann, wenn dies gemäß dem zweiten Modulationsmodus vorgesehen ist, nicht angesteuert, also nicht aktiviert werden, wenn eine Überlast- oder Überstromsituation vorliegt.

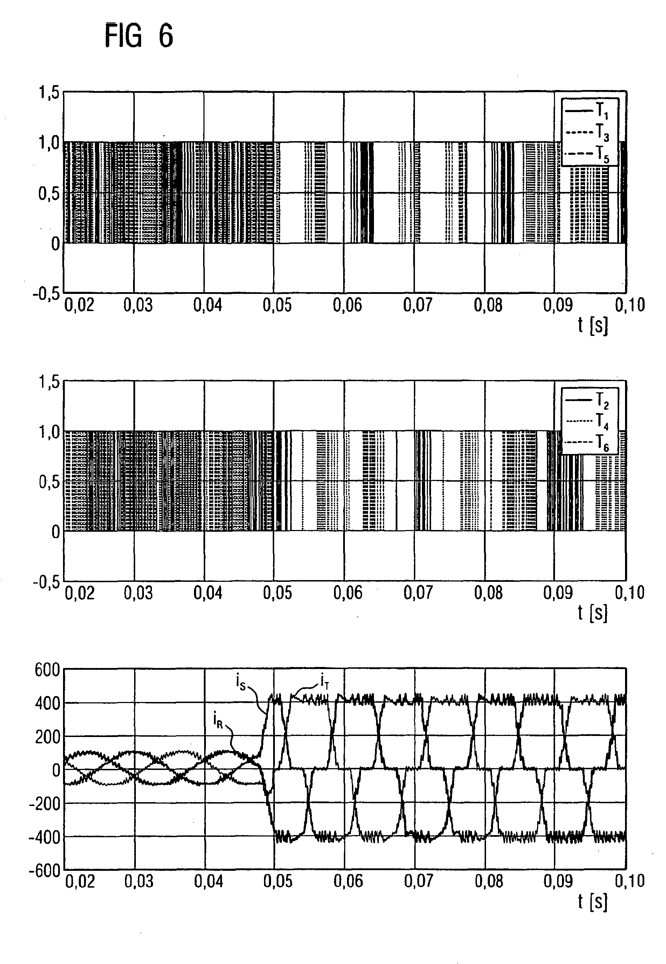

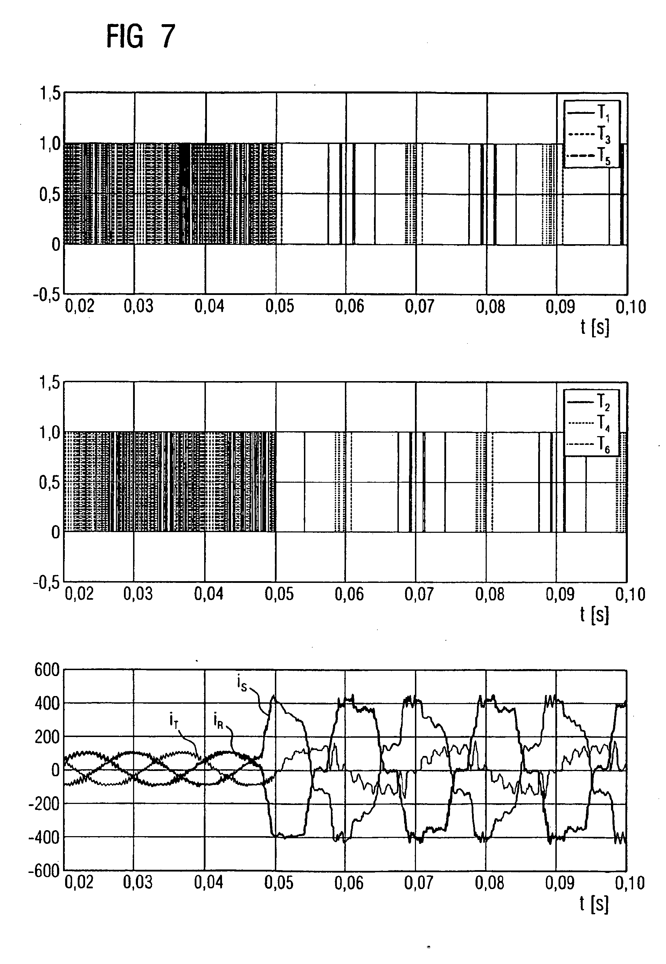

Im Unterschied zu FIG 6 zeigt FIG 7 eine Situation bei zweiphasigem Kurzschluss, und man kann in der jeweils unteren Darstellung, die in Prozent die Größe der Phasenströme $i_R$, $i_S$, $i_T$ zeigt, erkennen, dass der vom Kurzschluss nicht betroffene Phasenstrom im Wesentlichen einen sinusförmigen Verlauf beibehält und nur die von dem Kurzschluss betroffenen Phasenströme auf einen Effektivwert, der näherungsweise dem Dreifachen des Nennstroms entspricht, ansteigen. Dies reicht normalerweise aus, damit Sicherungseinheiten ansprechen und im Ergebnis eine Kurzschlussklärung erreicht ist.

Bei einem Stromrichter 10 wie in FIG 1 gezeigt kann ein Strom $i_R > 0$ nur durch die Diode D1 oder den als Halbleiterschalter fungierenden Transistor T2 fließen. Speziell im hier insbesondere betrachteten Fall eines Netzspannungseinbruchs oder eines Kurzschlusses ist die Spannung im Netz kleiner als die nur relativ langsam veränderliche Spannung $u_{DC}$ im Zwischenkreis. Dann fließt die Energie aus dem Zwischenkreis ins Netz und die Diode D1 wird in Sperrrichtung betrieben. Ein Ausschalten des Halbleiterschalters T2 führt somit sicher zu einem Absinken von $i_R$. Entsprechende Überlegungen gelten für die weiteren Halbleiterschalter T1-T6. Fließt bei anderen Anwendungsfällen der Strom $i_R$ über die Diode D1, so müssen, um bei jeder Netzphasenlage (unter der Voraussetzung, dass die verketteten Netzspannungen kleiner als die Zwischenkreisspannung sind: $u_{DC} > u_{RS2} \wedge u_{DC} > u_{RT2}$) sicher ein Absinken dieses Stroms an der Stromschwelle zu erzielen, alle Halbleiterschalter T3-T6 in den beiden anderen Brückenzeigen gesperrt werden. Der oben genannte Algorithmus muss damit entsprechend erweitert werden. Die Beurteilung, ob (wiederum unter o.g.

Voraussetzung) der aktuelle Phasenstrom über eine Diode D1-D6 fließt, ist einfach realisierbar:

$$i_R \geq 0 \text{ ist Diodenstrom genau dann, wenn zeitgleich der}$$

$$\text{Halbleiterschalter T2 gesperrt ist } (T_{2,SR} = 0),$$

$$i_R < 0 \quad \text{ist Diodenstrom genau dann, wenn zeitgleich der}$$
$$\text{Halbleiterschalter T1 gesperrt ist } (T_{1,SR} = 0).$$

Bei FIG 6 ist die Erhöhung der Phasenströme $i_R$, $i_S$, $i_T$ für alle Phasen gezeigt. Die beiden oberen Darstellungen in FIG 6 und FIG 7 zeigen jeweils die Ansteuersignale für die Halbleiterschalter der oberen Brückenhälfte (obere Darstellung) und der unteren Brückenhälfte T1, T3, T5; T2, T4, T6 (mittlere Darstellung). Bis zum Zeitpunkt von ca. t = 0,05 s schaltet jeder Halbleiterschalter T1-T6 entsprechend dem ersten Modulationsmodus (PWM) mit einer Frequenz von 2,5 kHz. Nach Erkennen der Ausnahme- oder Fehlersituation aufgrund des drei- oder zweiphasigen Kurzschlusses (FIG 6 bzw. FIG 7) erfolgt mit der Modusauswahl 30 (FIG 2) eine Umschaltung auf den zweiten Modulationsmodus (grundfrequente Modulation), so dass jeder Halbleiterschalter T1-T6 maximal für ein Drittel der Netzperiode pulst. Entsprechend der grundfrequenten Betriebsweise ist der Halbleiterschalter T1-T6 in der verbleibenden Zeit sicher gesperrt (FIG 4, FIG 5). Im betrachteten Beispiel führt z. B. der Halbleiterschalter, der in FIG 1 und in FIG 2 mit der Bezugsziffer T2 bezeichnet ist, maximal elf Schalthandlungen pro Netzperiode aus; dies entspricht einer maximalen mittleren Schaltfrequenz von 550 Hz. Gleichzeitig wird trotz des Netzkurzschlusses ein Überschreiten des zulässigen Stromrichtermaximalstroms und somit ein möglicher Gerätedefekt sicher verhindert.

Die Schalthandlungen mit der mittleren Schaltfrequenz weisen zudem noch einen weiteren Vorteil auf. Einerseits haben sie grundfrequenten Anteil. Die zusätzlichen Schalthandlungen zur Begrenzung von Überströmen finden (je Halbleiterschalter) nur in einem kurzen Teilintervall einer Netzperiode statt, wobei dann die Schaltfrequenz kurzzeitig im Bereich der PWM-Frequenz aus der Spannungseinprägung liegt. Dies ist wichtig, da eine feste niedrige Schaltfrequenz von z.B. 550Hz häufig (je nach Auslegung des Netzfilters) zu einer Resonanzanregung des Netzfilters führen würde.

Bei der in FIG 7 dargestellten Situation erfolgt wieder bei ca. t = 0,05 s eine Umschaltung zum zweiten Modulationsmodus. Bei dem zweiphasigen Kurzschluss fließt allerdings in der vom Kurzschluss nicht betroffenen Phase weiterhin nahezu Nennstrom. In den beiden anderen Netzphasen wird der geforderte hohe Kurzschlussstrom realisiert.

Durch die blockartige Form des erhöhten Kurzschlussstroms (FIG 6 und FIG 7, jeweils untere Darstellung) wird im Vergleich zum Sinusstrom gleicher Amplitude ein höherer Stromeffektivwert erreicht. Da für das Auslösen der Schutzeinrichtzungen der Effektivwert maßgeblich ist, stellt die Blockform des Stroms im Kurzschlussfall einen Vorteil gegenüber dem weiteren Einprägen eines Sinusstroms mit PWM dar.

Während Ausnahme- oder Fehlersituationen wie Netzstörungs- oder Kurzschlussphasen gelten in elektrischen Netzen in der Regel deutlich reduzierte oder keine Anforderungen hinsichtlich Netzverzerrungen/Spannungsoberschwingungen (Total Harmonic Distortion, THD). Während solcher Störsituationen sind die gezeigten Schalthandlungen in der Regel zulässig.

Damit lässt sich die Erfindung kurz wie folgt darstellen:

Es wird ein Verfahren zum Betrieb eines Stromrichters 10 mit einer mit steuerbaren Halbleiterschaltern T1, T2, T3, T4, T5, T6 bestückten Brückenschaltung, wobei die Halbleiterschalter T1-T6 während eines Normalbetriebs des Stromrichters 10 gemäß einer als erster Modulationsmodus bezeichneten Normalbetriebsmodulation angesteuert werden, und ein nach dem Verfahren arbeitender Stromrichter angegeben, bei dem während einer Ausnahme- oder Fehlersituation, insbesondere Netzspannungseinbruch oder Kurzschluss, die Ansteuerung der Halbleiterschalter T1-T6 auf Basis eines zweiten Modulationsmodus erfolgt, wobei in netzseitigen Strängen 24, 26, 28, an die der Stromrichter 10 angeschlossen ist, eine Messung durchgeführt wird und eine tatsächliche Ansteuerung der Halbleiterschalter T1-T6 in Ansehung von Schaltzeitpunkten des zweiten Modulationsmodus und einer logischen Verknüpfung mit Ergebnissen der Messung erfolgt. Die logische Verknüpfung mit Ergebnissen der Messung umfasst zumindest die Überwachung eines vorgegebenen oder vorgebbaren Schwellwertes und eine tatsächliche Ansteuerung der Halbleiterschalter T1-T6, erfolgt, auch wenn diese gemäß dem zweiten Modulationsmodus vorgesehen ist, dann nicht, wenn das Ergebnis der Messung einen Schwellwert überschreitet.

**Patentansprüche**

1. Verfahren zum Betrieb eines Stromrichters (10) mit einer mit steuerbaren Halbleiterschaltern (T1, T2, T3, T4, T5, T6) bestückten Brückenschaltung,
wobei die Halbleiterschalter (T1-T6) während eines Normalbetriebs des Stromrichters (10) gemäß einer als erster Modulationsmodus bezeichneten Normalbetriebsmodulation angesteuert werden,
wobei während einer Ausnahme- oder Fehlersituation, insbesondere Netzspannungseinbruch oder Kurzschluss, die Ansteuerung der Halbleiterschalter (T1-T6) auf Basis eines zweiten Modulationsmodus erfolgt,

wobei in netzseitigen Strängen (24, 26, 28), an die der Stromrichter (10) angeschlossen ist, eine Messung durchgeführt wird,
**dadurch gekennzeichnet, dass** die Ergebnisse der Messung in den netzseitigen Strängen mit den Schaltzeitpunkten gemäß dem zweiten Modulationsmodus einer logischen Verknüpfung unterworfen werden und eine tatsächliche Ansteuerung der Halbleiterschalter (T1-T6) in Abhängigkeit vom Ergebnis der logischen Verknüpfung erfolgt.

2.  Verfahren nach Anspruch 1, mit einer grundfrequenten Modulation als zweitem Modulationsmodus.

3.  Verfahren nach Anspruch 1 oder 2,
    wobei die logische Verknüpfung mit Ergebnissen der Messung zumindest die Überwachung eines vorgegebenen oder vorgebbaren Schwellwertes umfasst und
    wobei eine tatsächliche Ansteuerung der Halbleiterschalter (T1-T6), auch wenn diese gemäß dem zweiten Modulationsmodus vorgesehen ist, dann nicht erfolgt, wenn das Ergebnis der Messung einen Schwellwert überschreitet.

4.  Verfahren nach Anspruch 1, 2 oder 3,
    wobei die Messung in den netzseitigen Strängen (24-28) für jeden Strang (24-28) einzeln durchgeführt wird und die logische Verknüpfung der Ergebnisse jeder Messung sich nur auf die Schaltzeitpunkte derjenigen Halbleiterschalter (T1, T2; T3, T4; T5, T6) bezieht, die an den jeweiligen Strang (24-28) angeschlossen sind.

5.  Verfahren nach Anspruch 3 oder 4,
    wobei die tatsächliche Ansteuerung der Halbleiterschalter (T1-T6), auch wenn diese gemäß dem zweiten Modulationsmodus vorgesehen ist, auch dann nicht erfolgt, wenn das Ergebnis der Messung nach vorheriger Überschreitung des Schwellwerts noch oberhalb eines unteren Schwellwerts liegt.

6.  Verfahren nach Anspruch 3, 4 oder 5,
    wobei ein Halbleiterschalter (T1-T6), der einem gemäß dem zweiten Modulationsmodus anzusteuernden Halbleiterschalter (T1-T6) in der Brückenschaltung gegenüberliegt, antivalent angesteuert wird.

7.  Verfahren nach Anspruch 4, 5 oder 6,
    wobei die tatsächliche Ansteuerung der Halbleiterschalter (T1-T6), auch wenn diese gemäß dem zweiten Modulationsmodus vorgesehen ist, auch dann nicht erfolgt, wenn seit der vorherigen Überschreitung des Schwellwertes nicht mindestens eine vorgegebene oder vorgebbare Ruhezeit verstrichen ist.

8.  Verfahren nach einem der vorangehenden Ansprüche,
    wobei eine Umschaltung zwischen erstem und zweitem Modulationsmodus in Abhängigkeit von einer Schwellwertüberschreitung entweder des Strom in mindestens einen der netzseitigen Stränge (24-28) oder einer von dem Strom in mindestens einen der netzseitigen Stränge (24-28) direkt oder indirekt abhängigen Größe erfolgt.

9.  Verfahren nach Anspruch 8, wobei eine Umschaltung vom zweiten zum ersten Modulationsmodus erfolgt, wenn der Strom in allen netzseitigen Strängen (24-28) einen Schwellwert unterschreitet.

10. Verfahren nach Anspruch 9, wobei die Umschaltung zurück zum ersten Modulationsmodus dann erfolgt, wenn der Strom in allen netzseitigen Strängen (24-28) den Schwellwert für eine vorgegebene oder vorgebbare Dauer unterschreitet.

11. Verfahren nach Anspruch 9 oder 10, wobei die Umschaltung zurück zum ersten Modulationsmodus nur zu einem Kommutierungszeitpunkt des zweiten Modulationsmodus erfolgt.

12. Stromrichter mit Mitteln zum Ausführen des Verfahrens nach einem der vorangehenden Ansprüche, nämlich einerseits Betriebsmodusauswahlmitteln (30), zur Auswahl des ersten oder zweiten Modulationsmodus und zur Generierung von Signalen zur Ansteuerung der Halbleiterschalter (T1, T2, T3, T4, T5, T6),
    andererseits Strombegrenzungseingriffsmitteln (32) zur Generierung eines Signals in Abhängigkeit vom Ergebnis der Messung in einem oder mehreren der netzseitigen Stränge (24-28) sowie einer
    Verknüpfungseinheit (42) zur logischen Verknüpfung der von den Betriebsmodusauswahlmitteln (30) im zweiten Modulationsmodus erzeugten Schaltzeitpunkten und der von den Strombegrenzungseingriffsmitteln (32) generierten Signale und zur tatsächlichen Ansteuerung der Halbleiterschalter (T1-T6) entsprechend dem jeweiligen Verknüpfungsergebnis.

**13.** Stromrichter nach Anspruch 12, wobei das Strombegrenzungseingriffsmittel (30) einen Zweipunktregler umfasst.

**14.** Computerprogramm zur Ausführung eines Verfahrens gemäß einem der Ansprüche 1 bis 11.

**15.** Computersystem auf dem ein Computerprogramm nach Anspruch 14 geladen ist, insbesondere Stromrichter nach einem der Ansprüche 12 oder 13, wobei das Computerprogramm im Betrieb des Stromrichters zur Ansteuerung der Betriebsmodusauswahlmittel (30), der Strombegrenzungseingriffsmittel (32) und der Verknüpfungseinheit (42) zur Realisierung des Verfahrens nach einem der Ansprüche 1 bis 10 wirksam ist.

**Claims**

**1.** Method for operating a frequency converter (10) with a bridge circuit equipped with controllable semiconductor switches (T1, T2, T3, T4, T5, T6),
wherein the semiconductor switches (T1-T6) are activated during normal operation of the frequency converter (10) in accordance with a normal operational modulation referred to as a first modulation mode,
wherein, during an exception or error situation, especially mains voltage failure or short-circuit, the semiconductor switches (T1-T6) are activated on the basis of a second modulation mode,
wherein a measurement is performed in network-side phase lines (24, 26, 28), to which the frequency converter (10) is connected,
**characterised in that** the results of the measurement in the network-side phase lines are logically combined with the switching times in accordance with the second modulation mode and an actual activation of the semiconductor switches (T1-T6) is undertaken as a function of the result of the logical combination.

**2.** Method according to claim 1, with a basic-frequency modulation as the second modulation mode.

**3.** Method according to claim 1 or 2,
wherein the logical combination with results of the measurement comprises at least the monitoring of a predetermined or predeterminable threshold value, and
wherein an actual activation of the semiconductor switches (T1-T6), even if there is provision for this in accordance with the second modulation mode, does not take place if the result of the measurement exceeds a threshold value.

**4.** Method according to claim 1, 2 or 3,
wherein the measurement in the network-side phase lines (24-28) is carried out individually for each phase line (24-28) and the logical combination of the results of each measurement only relates to the switching times of those semiconductor switches (T1, T2; T3, T4; T5, T6) which are connected to the respective phase line (24-28).

**5.** Method according to claim 3 or 4,
wherein the actual activation of the semiconductor switches (T1-T6), even if there is provision for this in accordance with the second modulation mode, does not take place if the result of the measurement, after the threshold value was previously exceeded, still lies above a lower threshold value.

**6.** The method as claimed in claim 3, 4 or 5,
wherein a semiconductor switch (T1-T6), which lies opposite a semiconductor switch (T1-T6) to be activated in accordance with the second modulation mode in the bridge circuit, is activated antivalently.

**7.** Method according to claim 4, 5 or 6,
wherein the actual activation of the semiconductor switch (T1-T6), even if there is provision for this in accordance with the second modulation mode, does not take place even if at least one predetermined or predeterminable idle time has not elapsed since the previous exceeding of the threshold value.

**8.** Method according to one of the preceding claims,
wherein a switchover between first and second modulation mode takes place as a function of a threshold value being exceeded either of the current in at least one of the network-side phase lines (24-28) or of a variable depending directly or indirectly on the current in at least one of the network side phase lines (24-28).

**9.** Method according to claim 8, wherein a switchover from second to first modulation mode takes place when the current in all network-side lines (24-28) falls below a threshold value.

**10.** Method according to claim 9, wherein the switch back to the first modulation mode takes place when the current in all network-side phase lines (24-28) falls below the threshold value for a predetermined or predeterminable period of time.

**11.** Method according to claim 9 or 10, wherein the switch back to the first modulation mode only takes place at a commutation time of the second modulation mode.

**12.** Frequency converter with means for carrying out the method according to one of the preceding claims, namely on the one hand operating mode selection means (30), for selecting the first or second modulation mode and for generating signals for activating the semiconductor switches (T1, T2, T3, T4, T5, T6),
on the other hand current limitation intervention means (32) for generating a signal as a function of the result of the measurement in one or more of the network-side phase lines (24-28) as well as a logic unit (42) for logically combining the switching times created by the operating mode selection means (30) in the second modulation mode and the signals generated by the current limiting intervention means (32) and for actual activation of the semiconductor switches (T1-T6) in accordance with the respective logical combination result.

**13.** Frequency converter according to claim 12, wherein the current limiting intervention means (30) comprises a two-position controller.

**14.** Computer program for executing a method according to one of claims 1 to 11.

**15.** Computer system on which a computer program according to claim 14 is loaded, especially frequency converter according to claim 12 or 13, wherein the computer program is effective during the operation of the frequency converter for activating the operating mode selection means (30), the current limiting intervention means (32) and the logic unit (42) for realising the method according to one of claims 1 to 10.

## Revendications

**1.** Procédé pour faire fonctionner un convertisseur ( 10 ) de courant ayant un circuit en pont équipé de commutateurs ( T1, T2, T3, T4, T5, T6 ) à semiconducteurs pouvant être commandés, dans lequel on commande les commutateurs ( T1 à T6 ) à semiconducteurs pendant un fonctionnement normal du convertisseur ( 10 ) de courant suivant une modulation de fonctionnement normal désignée comme étant un premier mode de modulation,
dans lequel, pendant une situation exceptionnelle ou défectueuse, notamment pendant une rupture de la tension du secteur ou un court-circuit, la commande des commutateurs ( T1 à T6 ) à semiconducteurs s'effectue sur la base d'un deuxième mode de modulation,
dans lequel on effectue une mesure dans des branches ( 24, 26, 28 ) du côté du secteur auxquelles le convertisseur ( 10 ) de courant est raccordé,
**caractérisé en ce qu'**on soumet les résultats de la mesure dans les branches du côté du secteur avec les instants de commutation suivant le deuxième mode de modulation à une combinaison logique et on effectue une commande réelle des commutateurs ( T1 à T6 ) à semiconducteurs en fonction du résultat de la combinaison logique.

**2.** Procédé suivant la revendication 1, ayant une modulation en fréquence de base comme deuxième mode de modulation.

**3.** Procédé suivant la revendication 1 ou 2,
dans lequel la combinaison logique à des résultats de la mesure comprend au moins le contrôle d'une valeur de seuil donnée à l'avance ou pouvant l'être et
dans lequel il est prévu une commande réelle des commutateurs ( T1 à T6 ) à semiconducteurs, qui, même si celle-ci est prévue suivant le deuxième mode de modulation, ne s'effectue pas si le résultat de la mesure dépasse une valeur de seuil.

**4.** Procédé suivant la revendication 1, 2 ou 3,
dans lequel on effectue la mesure dans les branches ( 24 à 28 ) du côté du secteur individuellement pour chaque branche ( 24 à 28 ) et le combinaison logique des résultats de chaque mesure se rapporte seulement aux instants de commutation des commutateurs ( T1, T2, T3, T4, T5, T6 ) à semiconducteurs qui sont raccordés à la branche ( 24 à 28 ) respective.

**5.** Procédé suivant la revendication 3 ou 4,
dans lequel on n'effectue pas non plus la commande réelle des commutateurs ( T1 à T6 ) à semiconducteurs, même si celle-ci est prévue suivant le deuxième mode de modulation, si le résultat de la mesure après un dépassement précédent de la valeur de seuil se trouve encore au-dessus d'une valeur de seuil inférieure.

**6.** Procédé suivant la revendication 3, 4 ou 5,
dans lequel on commande en anticoïncidence un commutateur ( T1 à T6 ) à semiconducteur, qui est opposé dans le circuit en pont à un commutateur ( T1 à T6 ) à semiconducteur commandé suivant le deuxième mode de modulation.

**7.** Procédé suivant la revendication 4, 5 ou 6,
dans lequel on n'effectue pas non plus la commande réelle des commutateurs ( T1 à T6 ) à semiconducteurs, même si celle-ci est prévue suivant le deuxième mode de modulation, s'il ne s'est pas écoulé au moins un temps de repos prescrit ou pouvant l'être depuis le dépassement précédent de la valeur de seuil.

**8.** Procédé suivant l'une des revendications précédentes,
dans lequel on effectue une commutation entre le premier et le deuxième mode de modulation en fonction d'un dépassement d'une valeur de seuil, soit du courant dans au moins l'une des branches ( 24 à 28 ) du côté du secteur, soit d'une grandeur dépendant directement ou indirectement du courant dans au moins l'une des branches ( 24 à 28 ) du côté du secteur.

**9.** Procédé suivant la revendication 8, dans lequel on effectue une commutation du deuxième au premier mode de modulation, si le courant dans toutes les branches ( 24 à 28 ) du côté du secteur devient inférieur à une valeur de seuil.

**10.** Procédé suivant la revendication 9, dans lequel on revient sur la commutation au premier mode de modulation, si le courant dans toutes les branches ( 24 à 28 ) du côté du secteur est inférieur à la valeur de seuil pendant une durée donnée ou pouvant l'être.

**11.** Procédé suivant la revendication 9 ou 10, dans lequel on revient sur la commutation au premier mode de modulation, seulement à un instant de commutation du deuxième mode de modulation.

**12.** Convertisseur de courant comprenant des moyens pour effectuer le procédé suivant l'une des revendications précédentes, à savoir
d'une part, des moyens ( 30 ) de sélection d'un mode de fonctionnement pour la sélection du premier ou du deuxième mode de modulation et pour la production de signaux de commande des commutateurs ( T1, T2, T3, T4, T5, T6 ) à semiconducteurs, d'autre part, des moyens ( 32 ) d'intervention en limitation de courant pour produire un signal en fonction du résultat de la mesure dans l'une ou dans plusieurs des branches ( 24 à 28 ) du côté du secteur, ainsi que une unité ( 42 ) de combinaison pour la combinaison logique des instants de commutation produits dans le deuxième mode de modulation par les moyens ( 30 ) de sélection du mode de fonctionnement et des signaux produits par les moyens ( 32 ) d'intervention en limitation du courant et pour commander réellement les commutateurs ( T1 à T6 ) à semiconducteurs en fonction du résultat respectif de la combinaison.

**13.** Convertisseur de courant suivant la revendication 12, dans lequel les moyens ( 30 ) d'intervention en limitation du courant comprennent un régleur à deux points.

**14.** Programme d'ordinateur pour la réalisation d'un procédé suivant l'une des revendications 1 à 11.

**15.** Système d'ordinateur sur lequel un programme d'ordinateur suivant la revendication 14 est chargé, notamment convertisseur de courant suivant l'une des revendications 12 ou 13, dans lequel le programme d'ordinateur est efficace lorsque le convertisseur de courant est en fonctionnement pour commander les moyens ( 30 ) de sélection d'un mode de fonctionnement, les moyens ( 32 ) d'intervention en limitation du courant et l'unité ( 42 ) de combinaison pour la réalisation du procédé suivant l'une des revendications 1 à 10.

FIG 1

## FIG 2

## FIG 3

## FIG 5

## FIG 4

## FIG 6

## FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005012150 A1
- DE 102006015331 A1
- DE 102006028103 A1
- EP 0483744 A